# EUROPÄISCHE PATENTSCHRIFT

(11) **EP 0 691 531 B1**
(45) Veröffentlichungstag und Bekanntmachung des Hinweises auf die Patenterteilung: **28.10.1998**
(21) Anmeldenummer: 94110335.0
(22) Anmeldetag: 04.07.1994
(51) Int. Cl.: G01J 5/34, G08B 13/191

(54) **Infrarotdetektor mit einem pyroelektrischen Sensor**
Infrared detector comprising a pyroelectric sensor
Détecteur à infrarouge avec capteur pyroélectrique

(43) Veröffentlichungstag der Anmeldung: 10.01.1996
(73) Patentinhaber: CERBERUS AG, CH-8708 Männedorf (CH)
(72) Erfinder: Müller, Kurt Albert, Dr., CH-8712 Stäfa (CH); Mahler, Hansjürg, Dr., CH-8634 Hombrechtikon (CH)

(56) Entgegenhaltungen:
- EP-A- 0 287 827
- EP-A- 0 361 224
- EP-A- 0 370 426
- EP-A- 0 588 645
- PATENT ABSTRACTS OF JAPAN vol. 16, no. 199 (P-1351) 13. Mai 1992 & JP-A-04 031 789 (NIPPON CERAMIC)
- PATENT ABSTRACTS OF JAPAN vol. 11, no. 399 (P-651) 26. Dezember 1987 & JP-A-62 162 930 (MATSUSHITA ELECTRIC IND CO LTD)

## Beschreibung

Die vorliegende Erfindung betrifft einen Infrarotdetektor mit einem pyroelektrischen Sensor mit mindestens zwei strahlungsempfindlichen Sensorelementen, und mit einer Optik zur Fokussierung der aus dem zu überwachenden Raum auf den Detektor fallenden Infrarotstrählung auf den Sensor.

Ein aus der EP-A-0 370 426 bekannter pyroelektrischer Sensor dieser Art für einen Infraroteindringdetektor enthält zwei Paare von Sensorelementen, wobei jedes Paar aus zwei parallel oder in Serie geschalteten Sensorelementen besteht und die beiden Paare in Serie geschaltet sind. Die geometrische Anordnung der beiden Paare ist so gewählt, dass die vier Sensorelemente entweder ein um 45° gekipptes Quadrat oder ein Rechteck aufspannen.

Dieser bekannte Sensor ermöglicht eine bessere Anpassung der Dimensionen der Sensorelemente an das durch die Optik des Detektors auf die die Sensorelemente enthaltende Ebene projizierte Bild eines aufrecht gehenden Menschen, der ein Breiten/Höhen-Verhältnis von etwa 1:5 aufweist. Ausserdem können mit diesem Sensor im Vergleich zu älteren bekannten Sensoren mit der gleichen Sensorelementfläche wesentlich mehr Informationen aus dem Überwachungsraum gewonnen werden.

Wenn der in der EP-A-0 370 426 beschriebene Sensor zur Überwachung von langen, engen Korridoren eingesetzt werden soll, dann ergibt sich das Problem, dass wegen des sich mit zunehmender Distanz aufweitenden Überwachungsbereichs die Reichweite auf etwa 30 m begrenzt ist. Dabei bezeichnet Überwachungsbereich die Gesamtheit derjenigen Bereiche des Überwachungsraums, aus denen der Sensor über die zugehörige Optik Strahlung empfangen kann. Ab der genannten Distanz ist der Überwachungsbereich so stark aufgeweitet, dass die Seitenwände des Korridors in ihn hineinragen, wodurch bei Temperaturunterschieden zwischen den Seitenwänden und dem Korridor ein Fehlalarm ausgelöst werden kann. Diese Gefahr ist besonders dann vorhanden, wenn es sich bei einer der fraglichen Seitenwände um eine Aussenwand handelt, oder, wenn die Seitenwände zwar Innenwände sind, der Boden des Korridors aber oberhalb eines ungeheizten Raums, wie eines Kellers oder dergleichen, liegt.

Durch die Erfindung soll nun ein Infrarotdetektor mit einem pyroelektrischen Sensor der eingangs genannten Art so ausgebildet werden, dass nur eine geringe Ausweitung des Überwachungsbereichs auftritt und somit eine grosse Reichweite erzielt wird.

Diese Aufgabe wird erfindungsgemäss dadurch gelöst, dass die mindestens zwei Sensorelemente längs zweier symmetrisch zur Vertikalachse des Detektors orientierter, zueinander geneigter und einen spitzen Winkel einschliessender Geraden V-förmig angeordnet sind, so dass die von den Sensorelementen aufgespannte Fläche eine kürzere und eine längere Abschlusskante aufweist, und dass der Sensor relativ zur Optik so angeordnet ist, dass bei der Projektion der Sensorelemente in den Überwachungsraum die im Bereich der Spitze der genannten V-fömigen Fläche liegende kürzere Abschlusskante einen grösseren Abstand vorn Detektor aufweist als die längere.

Bei dieser Anordnung, bei der die kürzere Abschlusskante der von den Sensorelementen aufgespannten Fläche an der Spitze des V-förmigen Sensors liegt, ist die gegenseitige Anordnung von Sensor und Optik so gewählt, dass diese Spitze bei der Projektion einen grösseren Abstand vom Detektor aufweist als das offene Ende des V-förmigen Sensors. Da der Überwachungsbereich bekanntlich mit zunehmender Distanz vom Detektor ausgeweitet, die kürzere Abschlusskante also durch die Projektion verlängert wird, wird durch die erfindungsgemässe Lösung erreicht, dass der Überwachungsbereich vorne und hinten etwa gleich breit ist und sich daher weiter in den Korridor hineinschieben kann, ohne gegen eine Seitenwand zu stossen. Dadurch liegt die maximale Breite des Überwachungsbereichs in einer Distanz von 60 Metern knapp über 2 m, was gegenüber bekannten Detektoren eine Reduktion um über 50% bedeutet. Entsprechend beträgt die Reichweite in einem üblichen Korridor mit einer Breite von nicht weniger als 2 m, knapp 60 m, was gegenüber bisher eine Verdoppelung darstellt.

Im folgenden wird die Erfindung anhand von Ausführungsbeispielen und der Zeichnungen näher erläutert; es zeigt:
Fig. 1 eine Draufsicht auf einen Sensor des erfindungsgemässen Detektors,
Fig. 2 einen Schnitt durch eine für den Sensor von Fig. 1 geeignete Optik,
Fig. 3 eine Draufsicht auf das Überdeckungsmuster des Sensors von Fig. 1,
Fig. 4 ein Schema der Schaltung der Sensorelemente des Sensors von Fig. 1,
Fig. 5, 6 stark vereinfachte Darstellungen von zwei Varianten des Sensors von Fig. 1.

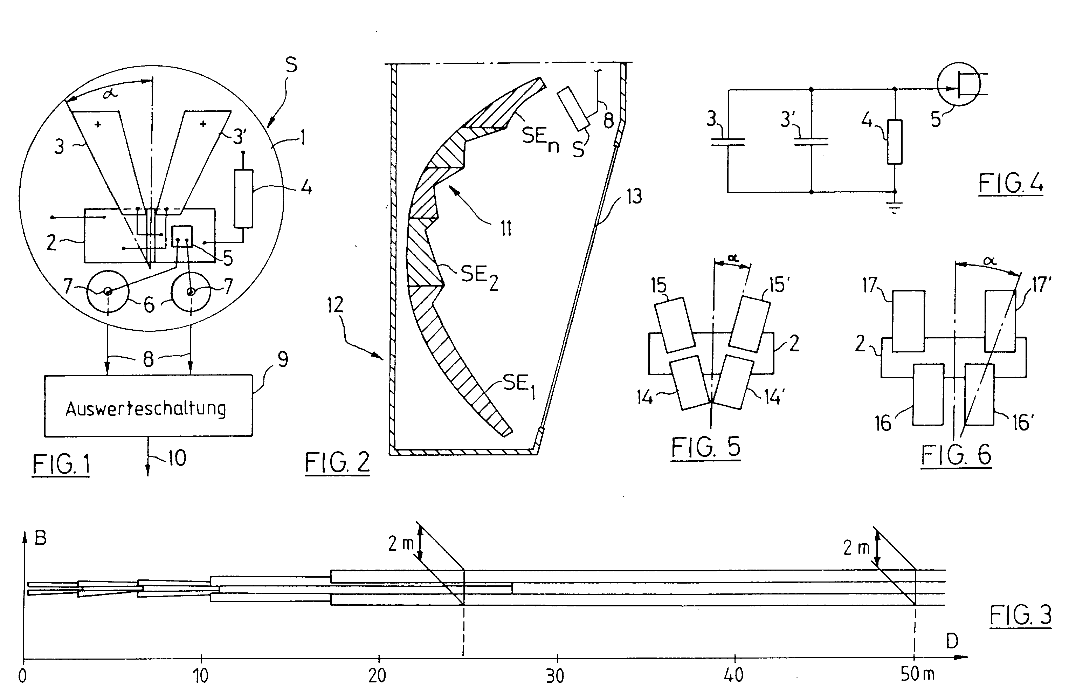

In Fig. 1 ist ein Sensor S dargestellt, der im wesentlichen aus einem Sockel 1, einem auf diesen aufgeklebten Substrat 2, aus auf dem Substrat 2 befestigten Sensorelementen 3 und 3', einem Widerstand 4, einem Sperrschicht-Feldeffekttransistor (FET) 5 und aus in Glasisolierungen 6 geführten Anschlussstiften 7 besteht, durch welche die elektrischen Verbindungen über Leitungen 8 zu einer Auswerteschaltung 9 geführt sind.

Das Substrat 2, das beispielsweise durch ein dünnes Plättchen aus Aluminiumoxid gebildet ist, besteht aus zwei gegeneinander isolierten Hälften, von denen jede ein Sensorelement 3 oder 3' trägt; die Sensorelemente sind pyroelektrische Plättchen bekannter Bauart aus beispielsweise LiTaO₃. Es ist auch möglich, anstelle des Substrats 2 und der auf dieses aufgeklebten Sensorelemente einen keramischen Chip aus PZT (Blei-Zirkonat-Titanat) mit aufgedampften Elektroden zu verwenden. Die letzteren bestehen aus einer ersten dünnen Schicht aus Titan, aus einer zweiten dünnen Schicht aus Gold und aus einer darauf in einem Druckverfahren applizierten schwarzen Epoxyschicht.

Wie sich Fig. 1 und dem Schaltschema von Fig. 4 entnehmen lässt, sind die Sensorelemente 3, 3' an ihrer unteren Fläche je auf eine Hälfte des Substrats 2 geklebt und an ihrer oberen Fläche leitend mit der jeweils anderen Substrathälfte verbunden.Aus der in Fig. 1 angegebenen Polarität der Sensorelemente 3, 3' ist ersichtlich, dass diese mit gleicher Polarisationsrichtung des pyroelektrischen Materials aufgeklebt sind. Das Gate des auf der in Fig. 1 rechten Substrathälfte angeordneten FET 5 ist leitend mit der oberen Fläche des Sensorelements 3 und mit der unteren Fläche des Sensorelements 3' verbunden; die in Fig. 1 linke Substrathälfte ist an Masse gelegt. Die Sensorelemente 3, 3' sind parallel zwischen Masse und den Gate-Anschluss des FET 5 geschaltet. Der letztere bildet den Eingang eines Verstärkerkanals der Auswerteschaltung 9, die bei Detektion einer Infrarotquelle im Überwachungsraum an einem Ausgang 10 ein Alarmsignal liefert. Die Infrarotquelle kann beispielsweise ein unerwünschter Eindringling oder ein Feuer sein. Die Sensorelemente 3, 3' sind dünne Plättchen mit an entgegengesetzten Flächen angeordneten Elektroden; sie bilden Kondensatoren mit einer Kapazität von beispielsweise etwa 10 pF. Bei einer durch Absorption von Infrarotstrahlung verursachten Temperaturänderung der Sensorelemente 3, 3' ändert sich die Polarisation von deren Material, wodurch im Sensorschaltkreis ein Stromfluss bewirkt wird.

Die aus dem Überwachungsraum auf den Detektor fallende Infrarotstrahlung wird durch eine geeignete Optik aus Spiegelelementen oder Fresnellinsen auf den Sensor S fokussiert. In Fig. 2 ist ein Beispiel einer derartigen Optik 11 mit Spiegelelementen SE₁ bis SEn dargestellt. Die Optik 11 ist zusammen mit dem Sensor S in einem in einer Höhe von beispielsweise 2,5 m in einer Ecke oder an einer Wand eines zu überwachenden Raumes montierten Gehäuse 12 angeordnet, welches ein infrarotdurchlässiges Fenster 13 aufweist. Das Gehäuse 12 enthält neben dem Sensor S die Auswerteschaltung 9, eine Alarmanzeige und/oder Anschlüsse zur Übertragung der am Ausgang 10 erhältlichen Signale zu einer Zentrale. In dieser kann neben der Fernanzeige des Zustands der einzelnen Detektoren eine weitere Verarbeitung der Alarmsignale, insbesondere eine Plausibilitätsüberprüfung, erfolgen. Die Optik 11 wird hier nicht näher beschrieben; es wird in diesem Zusammenhang auf die EP-A-0 361 224 (= US-A-4,490,783) verwiesen.

Die Optik 11 erzeugt einen lückenlosen, wand- oder vorhangähnlichen Überwachungsbereich. Fig. 3 zeigt eine Draufsicht auf das Überdeckungsmuster des Sensors S von Fig. 1, wobei auf der Ordinate die Breite B des Überwachungsbereichs auf dem Boden und auf der Abszisse die Distanz D von dem in einer Höhe von beispielsweise 2,5 bis 4 m über dem Boden montierten Detektor aufgetragen ist. Die in der Figur eingezeichneten und aus je zwei streifenförmigen Bereichen bestehenden Zonen entsprechen den Projektionen der beiden Sensorelemente 3 und 3' auf den Boden des Überwachungsraums durch die verschiedenen Spiegelelemente SE₁ bis SEₙ der Optik 11 (Fig. 2). Somit stellen diese Zonen diejenigen Bereiche des Bodens des Überwachungsraums dar, aus denen der Sensor S über die Optik 11 mit Strahlung beaufschlagt wird. Wie der Figur zu entnehmen ist, nimmt die Breite B des Strahlenvorhangs mit zunehmender Entfernung D vom Detektor zu und erreicht bei einer Entfernung D von etwa 25 m einen Wert von 2 m, der über eine Entfernung D von 50 m konstant bleibt.

Ein bevorzugtes Anwendungsbeispiel für den dargestellten Sensor S bilden die sogenannten Vorhangmelder und Überwachungsanordnungen zur Langbereichsdetektion, die insbesondere zur Überwachung von Korridoren eingesetzt werden. Im letzteren Fall war bisher die Reichweite derartiger Überwachungsanordnungen aus den weiter vorne, in der Beschreibungseinleitung, erwähnten Gründen bei einer Korridorbreite von nicht mehr als 2,5 m auf etwa 30 m begrenzt, so dass bei sehr langen Korridoren entsprechend viele Detektoren verwendet werden mussten. Bei dem in Fig. 1 dargestellten Sensor S und auch bei dessen in den Fig. 5 und 6 dargestellten Varianten ergibt sich gegenüber den aus dem Stand der Technik bekannten Sensoren eine ungefähre Verdoppelung der Reichweite. Diese Verbesserung wird durch eine spezielle Formgebung und/oder Anordnung der Sensorelemente 3, 3' (Fig. 1) erreicht.

Gemäss Fig. 1 sind die Sensorelemente 3 und 3' V-förmig angeordnet. Der Sensor S wird in dem an einer Wand befestigten Gehäuse 12 des bezogen auf Fig. 2 nach rechts unten "schauenden" Detektors in der in Fig. 1 dargestellten Lage montiert, so dass die Spitze der V-förmigen Anordnung der Sensorelemente unten liegt. Die gegenseitige Neigung der Sensorelemente ist so gewählt, dass ihre Projektion auf den Boden des Überwachungsraums ein Überdeckungsmuster mit annähernd parallelen Streifen ergibt (Fig. 3). Wesentlich für den angestrebten Effekt ist also die Form der äusseren Seitenkanten der Sensorelemente, deren geneigte Anordnung die parallelen Streifen des Überdeckungsmusters ergibt. Selbstverständlich ist es nicht unbedingt erforderlich, dass die äusseren Seitenkanten kontinuierlich aufeinander zulaufen; wie das Beispiel von Fig. 6 zeigt, ist auch ein abgestufter Verlauf möglich. Ebenso könnten beim Sensor S von Fig. 1 anstelle der trapezförmigen Sensorelemente 3, 3' auch parallelogrammförmige oder rechteckige Sensorelemente verwendet werden.

Ebenso hängt der angestrebte Effekt auch nicht davon ab, dass genau zwei Sensorelemente verwendet werden. Wie die Beispiele von Fig. 5 und 6 zeigen, können selbstverständlich auch vier Sensorelemente 14, 14', 15, 15' bzw. 16, 16', 17, 17' verwendet werden, wobei jeweils zwei und zwei Sensorelemente paarweise nebeneinander angeordnet und die nebeneinander angeordneten Sensorelemente parallel geschaltet sind.

Beim Ausführungsbeispiel von Fig. 5 sind je zwei Sensorelemente 14, 15 und 14', 15' entlang eines Schenkels eines V angeordnet und mit ihren Längskanten auf diesen Schenkel ausgerichtet. Beim Ausführungsbeispiel von Fig. 6 liegen die Sensorelemente 16, 16' und 17, 17' nicht schräg zur Vertikalen sondern parallel zu dieser; sie sind also nicht auf die Schenkel des V ausgerichtet. Trotzdem ist aber ebenfalls ein V-förmige Anordnung der Sensorelemente gegeben, weil einander entsprechende Punkte der beiden Sensorelemente 16, 17 bzw, 16', 17' jeder Spalte der Sensormatrix auf einer zu einem der Schenkel eines V parallelen Geraden liegen.

Für alle drei gezeigten Ausführungsformen der Sensorelemente gilt, dass der Winkel a zwischen der Vertikalen und der äusseren Seitenkante (Fig. 1, 5) bzw. zwischen der Vertikalen und der Verbindungslinie gleicher Punkte zweier Sensorelemente emer Spalte der Sensormatrix zwischen 10° und 25° liegt.

Neben dem schon erwähnten Vorteil des sich mit zunehmender Distanz vom Detektor nur relativ wenig aufweitenden Überwachungsbereichs hat der beschriebene Sensor den weiteren Vorteil, dass sowohl Eindringlinge an der Peripherie des Überwachungsbereichs, also solche mit extrem kleiner Winkelgeschwindigkeit, als auch Eindringlinge in unmittelbarer Detektornähe, also solche mit extrem grosser Winkelgeschwindigkeit, sicher detektiert werden.

## Patentansprüche

1. Infrarotdetektor, mit einem pyroelektrischen Sensor mit mindestens zwei strahlungsempfindlichen Sensorelementen, und mit einer Optik zur Fokussierung der aus dem zu überwachenden Raum auf den Detektor fallenden Infrarotstrählung, dadurch gekennzeichnet, dass die mindestens zwei Sensorelemente (3, 3'; 14, 14', 15, 15'; 16, 16', 17, 17') längs zweier symmetrisch zur Vertikalachse des Detektors orientierter, zueinander geneigter und einen spitzen Winkel (2α) einschliessender Geraden V-förmig angeordnet sind, so dass die von den Sensorelementen aufgespannte Fläche eine kürzere und eine längere Abschlusskante aufweist, und dass der Sensor (S) relativ zur Optik (11) so angeordnet ist, dass bei der Projektion der Sensorelemente in den Überwachungsraum die im Bereich der Spitze der genannten V-förmigen Fläche liegende kürzere Abschlusskante einen grösseren Abstand vom Detektor aufweist als die längere.

2. Infrarotdetektor nach Anspruch 1, dadurch gekennzeichnet, dass zwei Sensorelemente (3, 3') vorgesehen sind, deren äussere Seitenkanten parallel zu den genannten Geraden verlaufen.

3. Infrarotdetektor nach Anspruch 2, dadurch gekennzeichnet, dass die beiden Sensorelemente (3, 3') eine trapezförmige Gestalt aufweisen.

4. Infrarotdetektor nach Anspruch 2, dadurch gekennzeichnet, dass die beiden Sensorelemente (3, 3') eine parallelogrammförmige Gestalt aufweisen.

5. Infrarotdetektor nach Anspruch 2, dadurch gekennzeichnet, dass die beiden Sensorelemente eine rechteckige Gestalt aufweisen.

6. Infrarotdetektor nach Anspruch 1, dadurch gekennzeichnet, dass vier in zwei Reihen und paarweise entlang den genannten Geraden angeordnete Sensorelemente (14, 14', 15, 15'; 16, 16', 17, 17') vorgesehen sind.

7. Infrarotdetektor nach Anspruch 6, dadurch gekennzeichnet, dass die vier Sensorelemente (14, 14', 15, 15') parallel zu den genannten Geraden orientiert sind.

8. Infrarotdetektor nach Anspruch 6, dadurch gekennzeichnet, dass die vier Sensorelemente (16, 16', 17, 17') parallel zueinander ausgerichtet sind und mit den genannten Geraden einen spitzen Winkel (α) einschliessen.

9. Infrarotdetektor nach einem der Ansprüche 1 bis 8, dadurch gekennzeichnet, dass der von den genannten Geraden eingeschlossene Winkel (2α) zwischen 20° und 50° beträgt.

## Claims

1. Infrared detector with a pyroelectric sensor comprising at least two radiation-sensitive sensor elements and having an optical system for focusing the infrared radiation incident on the detector from the room under surveillance, characterized in that the at least two sensor elements (3, 3'; 14, 14', 15, 15'; 16, 16', 17, 17') are disposed V-shaped along two straight lines oriented symmetrically to the vertical axis of the detector and mutually inclined and enclosing an acute angle (2α) so that the area covered by the sensor elements has a shorter and a longer terminal edge, and in that the sensor (S) is disposed relatively to the optical system (11) so that, on projecting the sensor elements into the room under surveillance, the shorter terminal edge of the said V-shaped surface is at a greater distance from the detector than the longer one.

2. Infrared detector according to Claim 1, characterized in that two sensor elements (3, 3') are provided whose outer side edges extend parallel to the said straight lines.

3. Infrared detector according to Claim 2, characterized in that the two sensor elements (3, 3') have a trapezoidal shape.

4. Infrared detector according to Claim 2, characterized in that two sensor elements (3, 3') have a parallelogram shape.

5. Infrared detector according to Claim 2, charecterized in that the two sensor elements have a rectangular shape.

6. Infrared detector according to Claim 1, characterized in that four sensor elements (14, 14', 15, 15'; 16, 16', 17, 17') are provided which are disposed in two rows and in pairs along the said straight lines.

7. Infrared detector according to Claim 6, characterized in that the four sensor elements (14, 14', 15, 15') are oriented parallel to the said straight lines.

8. Infrared detector according to Claim 6, characterized in that the four sensor elements (16, 16', 17, 17') are aligned parallel to one another and enclose an acute angle (α) with the said straight lines.

9. Infrared detector according to one of Claims 1 to 8, characterized in that the angle (2α) enclosed by the said straight lines is between 20° and 50°.

## Revendications

1. Détecteur à infrarouge comportant un capteur pyroélectrique, comportant au moins deux éléments capteurs sensibles au rayonnement et comportant un objectif pour concentrer le rayonnement infrarouge provenant de la zone à surveiller et incidet sur le détecteur, caractérisé en ce que les au moins deux éléments (3, 3'; 14, 14', 15, 15'; 16, 16', 17, 17') capteurs sont disposés en forme de V le long de deux droites orientées symétriquement à l'axe vertical du détecteur, inclinées l'une par rapport à l'autre et formant un angle (2α) aigu, si bien que la surface définie par éléments capteurs comporte un bord d'extrémité plus court et un bord d'extrémité plus long, et en ce que, par rapport à l'objectif (11), le capteur (S) est monté de telle manière que, dans la projection des éléments capteurs dans la zone de surveillance, le bord d'extrémité plus court se trouvant dans la partie de pointe de la surface en forme de V précitée est à une plus grande distance du détecteur que le bord d'extrémité plus long.

2. Détecteur à infrarouge suivant la revendication 1, caractérisé en ce qu'il est prévu des éléments (3, 3') capteurs dont les bords latéraux extérieurs s'étendent parallèlement aux droites précitées.

3. Détecteur à infrarouge suivant la revendication 2, caractérisé en ce que les deux éléments (3, 3') capteurs ont une forme trapézoïdale.

4. Détecteur à infrarouge suivant la revendication 2, caractérisé en ce que les deux éléments (3, 3') capteurs ont une forme de parallélogramme.

5. Détecteur à infrarouge suivant la revendication 2, caractérisé en ce que les deux éléments capteurs ont une forme rectangulaire.

6. Détecteur à infrarouge suivant la revendication 1, caractérisé en ce qu'il est prévu quatre éléments (14, 14', 15, 15', 16, 16', 17, 17') capteurs disposés en deux rangées et par paire le long des droites précitées.

7. Détecteur à infrarouge suivant la revendication 6, caractérisé en ce que les quatre éléments (14, 14', 15, 15') capteurs sont orientés parallèlement aux droites précitées.

8. Détecteur à infrarouge suivant la revendication 6, caractérisé en ce que les quatre éléments (16, 16', 17, 17') capteurs sont dirigés parallèlement les uns aux autres et forment un angle (α) aigu avec les droites précitées.

9. Détecteur à infrarouge suivant l'une des revendications 1 à 8, caractérisé en ce que l'angle (2α) formé par les droites précitées est compris entre 20 ° et 50°.
